# EUROPÄISCHE PATENTANMELDUNG

(11) **EP 1 094 267 A1**
(43) Veröffentlichungstag der Anmeldung: **25.04.2001**
(21) Anmeldenummer: 99121112.9
(22) Anmeldetag: 22.10.1999
(51) Int. Cl.: F16L 55/033, F16L 27/10

(54) **Vorrichtung zur Reduktion von Körperschallübertragungen in Rohrleitungen**

(71) Anmelder: Dobson Industries Corp., Wickhams Cay, Road Town, Tortola (VG)
(72) Erfinder: Bootz, Andreas, 64367 Mühltal/Nieder-Ramstadt (DE)
(74) Vertreter: Troesch Scheidegger Werner AG

(57) **Zusammenfassung**

In einer Anordnung zur Reduktion von Körperschallübertragungen in einer ein fluides Medium führenden Leitung (1, 6) ist ein Trennbereich der das fluide Medium führenden Leitung (1, 6) vorgesehen, aufweisend eine Verbindungsanordnung zum Verbinden der beiden Anschlussenden (13, 16) der getrennten Leitung. Diese Verbindungsanordnung besteht aus einem Zwischenmedium (3) mit einem die beiden Leitungen verbindenden dichten Leitungsabschnitt (20) sowie Mitteln (2, 5, 18), um das Zwischenmedium (3) zu verpressen.

## Beschreibung

Die vorliegende Erfindung betrifft eine Anordnung zur Reduktion von Körperschallübertragungen in einer ein fluides Medium führenden Leitung und insbesondere eine Vorrichtung zur Reduktion der Körperschallübertragung in Hydrauliksystemen bzw. Hydraulikleitungen bei hohen Drücken.

In Hydrauliksystemen, Abgasleitungen bzw. generell in Flüssigkeiten oder Gasen führenden Leitungssystemen besteht oft das Problem der Übertragung bzw. des Fortlaufens von Vibrationen, Schallwellen und dergleichen. Diese werden beispielsweise verursacht durch Pumpen, stossweise geführte Flüssigkeiten oder Gase etc.

Im speziellen und beispielsweise soll diese Problematik anhand von Hydrauliksystemen beschrieben werden. Aufgrund des ungleichförmigen Förderstromes beispielsweise von Verdrängerpumpen in Hydrauliksystemen und den daraus resultierenden Druckpulsationen werden die Wandungen eines Hydrauliksystems zu Schwingungen angeregt. Hierdurch kommt es zu einer Emission von Luftschall und somit zu einer geräuschlichen Beeinträchtigung der Umgebung. In Hydrauliksystemen werden beispielsweise die Wandungen von Rohrleitungen durch die Pulsation des Flüssigkeitsstromes zu Schwingungen angeregt. Weiterhin werden Schwingungen, die in der Hydropumpe selbst entstehen, übertragen. Um die Schallabstrahlung in nachgeschalteten Systemen, wie z.B. in einem Hydrozylinder bzw. generell bei einem Verbraucher oder den verbindenden Rohrleitungen, zu vermeiden, ist somit die Förderstrompulsation zu glätten. Dies kann beispielsweise mit Hilfe eines Pulsationsminderers erfolgen, der als Dehnschlauch oder als Speicherelement ausgeführt ist. Derartige Pulsationsminderer, wie beispielsweise Dehnschläuche, sind aus der EP 426 789 bzw. der EP 471 044 bekannt. Adaptive passive und aktive Pulsationsdämpfer mit Speicherelement sind aus der EP 679 832 bzw. EP 633 400 bekannt. Der Einbauort sollte dabei möglichst nahe an der Pulsationsquelle (Hydropumpe) liegen. Erfolgt mit dieser Massnahme eine Glättung der Flüssigkeitspulsation, so werden in nachgeschalteten Systemen die Wandungen nicht mehr zu Schwingungen angeregt. Die Schwingungen, die in der Rohrleitung bzw. in der Hydropumpe entstehen, werden jedoch über den Pulsationsminderer hinweg übertragen, sofern dieser keine ausreichende Dämmung der Körperschallübertragung gewährleistet. Als Pulsationsminderer mit geringer Körperschallübertragung in Hydrauliksystemen mit hohem Betriebsdruck werden nach dem aktuellen Stand der Technik Dehnschläuche eingesetzt. Diese besitzen zur Gewährleistung der Druckfestigkeit Einlagen aus Kunststoffgewebe, die unter hohem Betriebsdruck gespannt werden und Körperschall in begrenztem Masse übertragen. Dieser breitet sich in nachgeschalteten Systemen aus und führt somit zu Restschwingungen und zur Abstrahlung von Luftschall in der gesamten Struktur. Um eine geräuschliche Beeinträchtigung der Umgebung weitgehendst zu verhindern, ist neben der Glättung von Flüssigkeitspulsation folglich auch für eine Dämmung der Körperschallübertragung zu sorgen.

Zur Dämmung derartiger Schallübertragungen wird beispielsweise in der US 3 936 078 ein Dämpfungselement beschrieben, wobei in einem Leitungsunterbruch elastisches Material zwischen zwei speziell ausgebildeten Anschlussenden vorgesehen ist. Weitere analoge Dämpfungselemente werden in der EP 575 727 sowie der US 4 045 057 beschrieben. Aus der US 5 639 127 sowie der EP 0 615 595 sind Dämpfungsanordnungen bekannt speziell geeignet bei Abgasanlagen von Kraftfahrzeugen.

Die Aufgabe der vorliegenden Erfindung besteht nun im Schaffen einer Anordnung zur Reduktion von Vibrations- bzw. Körperschallwellenübertragung in fluide Medien führenden Leitungen, welche insbesondere geeignet ist in Hydrauliksystemen mit hohen Betriebs- bzw. Arbeitsdrücken.

Erfindungsgemäss wird die gestellte Aufgabe mittels einer Anordnung gemäss dem Wortlaut nach Anspruch 1 gelöst.

Vorgeschlagen wird, dass zur Reduktion von Körperschallübertragungen in einer ein fluides Medium führenden Leitung ein Trennbereich vorgesehen ist, der die das fluide Medium führende Leitung unterbricht, aufweisend eine Verbindungsanordnung zum Verbinden der beiden entsprechenden Anschlussenden der getrennten Leitung. Dieser Trennbereich besteht mindestens aus einem Zwischenmedium mit einem die beiden Leitungen verbindenden, dichten Leitungsabschnitt sowie aus Mitteln, um das Zwischenmedium zu verpressen bzw. um einen Druck auf dieses Zwischenmedium auszuführen.

Das Zwischenmedium weist dabei vorzugsweise eine geringere Dichte auf als das Leitungsmaterial, um eine Dämpfung der Schallübertragung zu erzielen. Aufgrund der Verpressung ergibt sich, dass das Zwischenmedium im unmontierten Zustand ein grösseres Volumen aufweist als im mittels der Mittel zum Verpressen montierten Zustand.

Weiter wird vorgeschlagen, dass zwischen den Anschlussenden der unterbrochenen Leitung ein unelastischer Zwischenring angeordnet ist, welcher vorzugsweise eine höhere Dichte aufweist als das Zwischenmedium.

Gemäss einer bevorzugten Ausführungsvariante besteht das Zwischenmedium aus einem weichen oder elastischen Material.

Weitere bevorzugte Ausführungsvarianten der erfindungsgemäss definierten Anordnung sind in den abhängigen Ansprüchen definiert.

Ein Unterschied der erfindungsgemäss vorgeschlagenen Anordnung im Vergleich zu all den diversen Dämpfungselementen und Einrichtungen, bekannt aus dem Stand der Technik, besteht darin, dass das zwischen den Anschlussenden der unterbrochenen Leitung angeordnete Zwischenmedium im montierten Zustand der Anordnung verpresst ist. Dadurch entsteht an den Trennflächen von Zwischenmedium und Anschlussenden bzw. dem Zwischenring eine Flächenpressung, welche die Dichtfunktion unterstützt.

Entsprechend eignet sich die erfindungsgemäss vorgeschlagene Anordnung insbesondere für die Reduktion von Vibrations- bzw. Schallwellenübertragungen in Hydrauliksystemen mit hohen Drükken.

Die Erfindung wird nun beispielsweise und unter Bezug auf die beigefügten Figuren näher erläutert. Dabei zeigen:
- Fig. 1:: Schematisch dargestellt, ein Hydrauliksystem mit Elementen zur Dämmung von Flüssigkeitspulsationen und Körperschall,
- Fig. 2:: eine erfindungsgemässe Vorrichtung zur Dämmung von Körperschall bzw. Vibrationen,
- Fig. 3:: eine weitere erfindungsgemässe Vorrichtung, unmittelbar angeschlossen an ein Pumpengehäuse zur Entkoppelung der Schwingungen, und
- Fig. 4:: eine graphische Darstellung zum Nachweis der Funktion einer erfindungsgemässen Entkoppelungsvorrichtung.

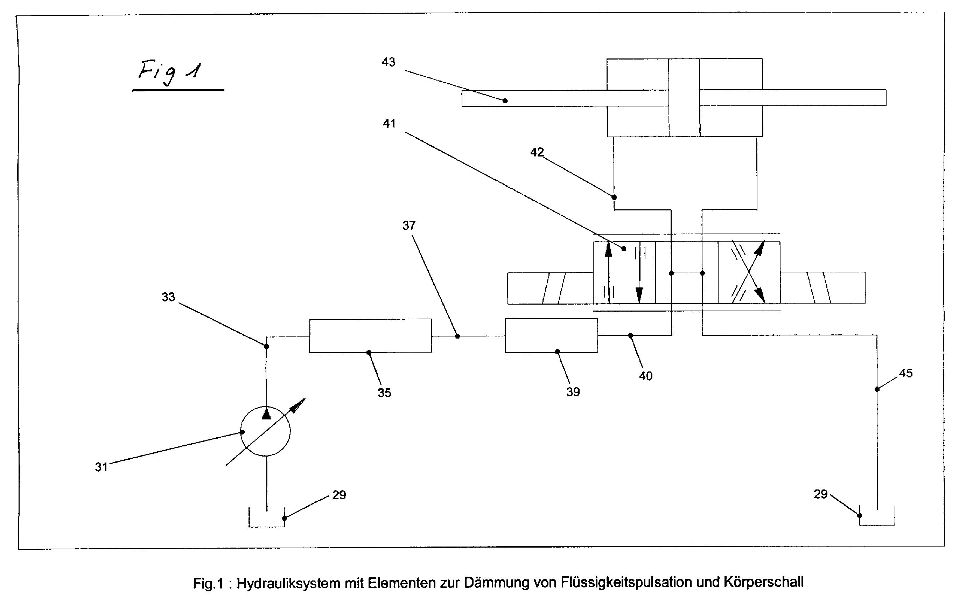

In Fig. 1 ist ein Hydrauliksystem dargestellt, in dem Massnahmen zur Minderung von Druckpulsationen und Körperschallübertragung implementiert sind. Dabei wird das Hydraulikmedium, wie beispielsweise Hydrauliköl, mittels einer Hydropumpe 31 gefördert. Aufgrund des ungleichförmigen Förderstroms der Hydropumpe und den daraus resultierenden Druckpulsationen werden die Wandungen des Hydrauliksystems zu Schwingungen angeregt. Hierdurch kommt es zu einer Emission von Luftschall und somit zu einer geräuschlichen Beeinträchtigung der Umgebung. Im dargestellten Hydrauliksystem werden die Wandungen der Rohrleitung 33 durch die Pulsation des Flüssigkeitsstromes zu Schwingungen angeregt. Weiterhin werden Schwingungen, die in der Hydropumpe 31 selbst entstehen, übertragen. Um die Schallabstrahlung in nachgeschalteten Systemen, wie beispielsweise dem in Fig. 1 dargestellten Gleichgangzylinder 43 oder den verbindenden Rohrleitungen 40 und 42, zu vermeiden, ist die Förderstrompulsation zu glätten. Dies geschieht zunächst mit Hilfe eines Pulsationsminderers 35, der beispielsweise als Dehnschlauch oder als Speicherelement ausgeführt ist, wie eingangs unter Bezug auf diverse europäische Patentschriften näher erläutert. Die Schwingungen, die in der Rohrleitung 33 bzw. in der Hydropumpe entstehen, werden jedoch über den Pulsationsminderer 35 hinweg übertragen, sofern dieser keine ausreichende Dämmung der Körperschallübertragung gewährleistet. Speziell bei hohem Betriebsdruck sind die aus dem Stand der Technik bekannten Pulsationsminderer nicht geeignet, Körperschall ausreichend zu dämpfen, womit dieser im begrenzten Masse auf Rohrleitung 37 übertragen wird. Dieser breitet sich somit im nachgeschalteten System aus und führt somit zu Restschwingungen und zur Abstrahlung von Luftschall in der gesamten Struktur. Um eine geräuschliche Beeinträchtigung der Umgebung weitgehendst zu verhindern, ist neben der Glättung von Flüssigkeitspulsationen im Dämpfer 35 folglich auch für eine Dämmung der Körperschallübertragung zu sorgen, was in Fig. 1 als Vorrichtung 39 bezeichnet wird. Dabei handelt es sich um die erfindungsgemäss vorgeschlagene Vorrichtung zur Dämmung von Körperschall, wobei diese Vorrichtung wie dargestellt stromabwärts der Dämmung von Flüssigkeitspulsationen zu integrieren ist, da ansonsten infolge von Druckpulsationen die Wandungen des Systems erneut zu Schwingungen angeregt werden, was zu einer Entstehung von Körperschall führt. Durch Anordnen dieser Vorrichtung 39 zur Dämmung von Körperschall sind die nachfolgenden Rohrleitungen 40 und 42 nahezu frei von Vibrationen bzw. Körperschallwellen, womit auch verbraucherseits ein beispielsweise 4/3-Wegventil 41 sowie der Gleichgangzylinder 43 frei von Körperschall sind. Schlussendlich wird das Hydraulikmedium in der abschliessenden Rohrleitung 45 erneut dem Vorratsbehälter 29 zugeführt.

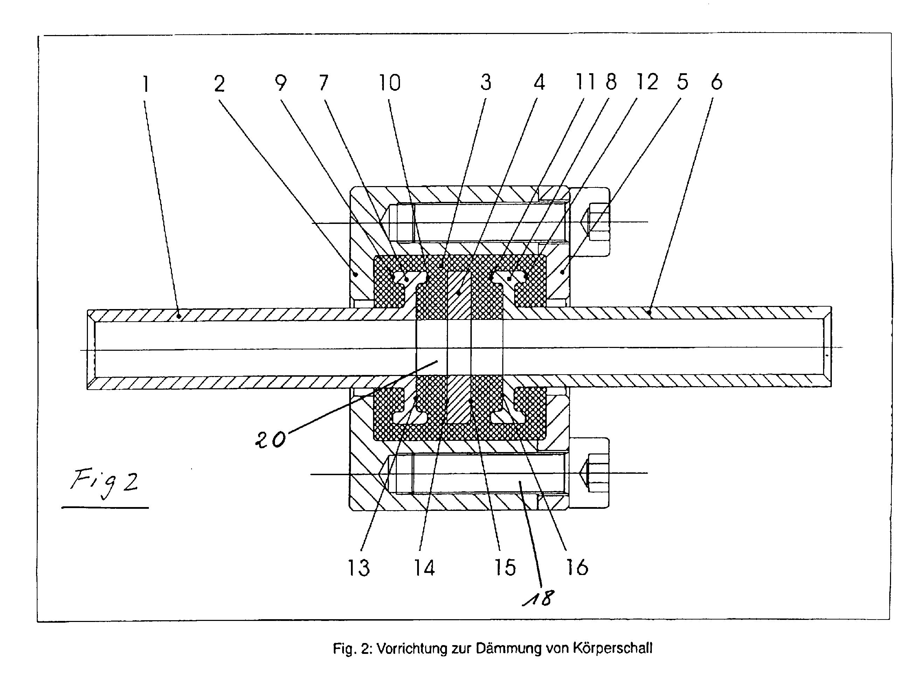

In Fig. 2 nun ist eine für den Zweck der Körperschalldämmung entwickelte Vorrichtung im Längsschnitt dargestellt. Die Körperschalldämmung wird im wesentlichen durch eine vollkommene Trennung der beispielsweise metallischen Oberflächen der Rohrleitungen 1 und 6 mit Hilfe eines Zwischenmediums 3 erreicht. Das Rohr 1 überträgt die an der Pumpe 31 erzeugten Schwingungen (Körperschall). Das Zwischenmedium 3 hat eine vorzugsweise sehr viel geringere Dichte als das Rohrmaterial. Durch den Dichteunterschied von Rohr 1 und Zwischenmedium 3 werden die ankommenden Schallwellen an deren Trennfläche zum Grossteil reflektiert und nur zu einem geringen Teil durch das Zwischenmedium 3 weitergeleitet. Hinzu kommt die Dämpfungseigenschaft (Absorption) des vorzugsweise weich auszuführenden Zwischenmediums, wodurch zusätzlich Schallenergie dissipiert wird. Die Trennfläche zwischen dem Zwischenmedium 3 und dem Rohr 6 dient der Reflexion von Schallwellen, die im Zwischenmedium übertragen werden.

Durch die Elastizität des Zwischenmediums übernimmt dieses zusätzlich eine Dichtfunktion. Zur Sicherung der Dichtheit auch bei hohen Drücken sind die Rohrenden 7 und 8 wie dargestellt ausgeführt. Durch das Verschrauben einer aussen umgreifenden Hülle 2 mit einem Deckel 5 wird das elastische Zwischenmedium, welches im unmontierten Zustand ein grösseres als das dargestellte Volumen besitzt, verpresst. Aufgrund der ausgeführten Rohrenden kommt es im Bereich der dargestellten überstehenden Nasen 9, 10, 11 und 12 zu einer erhöhten Pressung des Zwischenmediums. Um diese auch über der gesamten Distanz, die die beiden Rohrenden voneinander trennt, aufrechtzuerhalten, ist vorzugsweise ein unelastischer Zwischenring 4 vorzusehen, welcher ebenfalls beispielsweise aus Metall hergestellt sein kann. Weiterhin wird bei einer Beaufschlagung des Systems mit hohem Druck das elastische Zwischenmedium in radialer Richtung verdichtet. Durch die Querschnittsverengung in radialer Richtung, die sich aus der Formgebung der Rohrenden ergibt, kann das Zwischenmedium nicht verdrängt werden. Es entsteht an den Trennflächen 13, 14, 15 und 16 eine zusätzliche Verpressung von Zwischenmedium und den Rohrenden, die die Dichtfunktion unterstützt.

In Messungen mit einem vorgeschalteten Pulsationsminderer (Dämmfaktor 10) konnte gezeigt werden, dass die Schwingungsamplituden im Rohrmaterial um den Faktor 8 reduziert werden konnten.

Schliesslich sei darauf hingewiesen, dass die Höhe der Körperschalldämmung massgeblich von der Dämmung der Flüssigkeitspulsationen abhängen kann, da eine mangelhafte Dämmung der Flüssigkeitspulsation zu Körperschall im System stromabwärts der Körperschalldämmung führen kann.

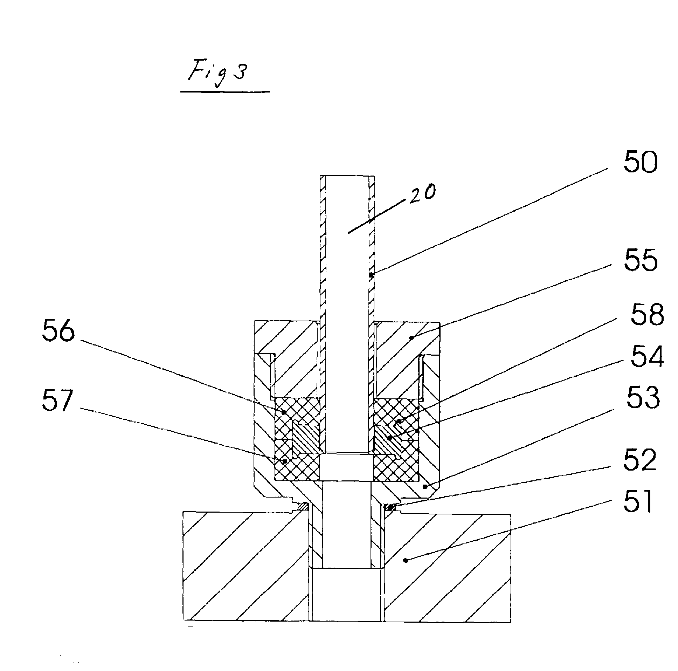

Fig. 3 zeigt eine weitere Ausführungsvariante einer Entkoppelungsvorrichtung, welche in ein Pumpengehäuse zur Entkoppelung der Schwingungen und/oder an einem dem Pulsationsdämpfer nachgeschalteten Verbraucher eingeschraubt werden kann. In Fig. 3 sind das Pumpengehäuse oder der Verbraucher durch den Flansch 51 repräsentiert. Die wichtigsten Aspekte bezüglich der Funktion des Entkoppelungselementes werden auch hier erfüllt. Wie auch bei dem in Fig. 2 dargestellten Element wird die vollkommene Trennung der metallischen Oberflächen erreicht. Das Ende des Rohres 50 weist wiederum eine Aufkragung auf, welche durch eine Scheibe 54 gebildet wird, welche durch eine Schweiss- oder Lötverbindung fest mit dem Rohr 50 verbunden ist. Somit ergibt sich eine ganz ähnliche Geometrie des Rohrendes wie bei denjenigen dargestellt in Fig. 2. Diese Ausführung des Rohrendes ist fertigungstechnisch besser durchführbar. Durch die Ausführung der ringförmigen Nasen 58 an den beiden Stirnseiten der Scheibe 54 wird auch hier die Dichtfunktion unterstützt. Wird die das Fluid führende Leitung 20 mit Druck beaufschlagt, so wird das gummielastische Zwischenmedium, gebildet durch ein scheibenförmiges Element 57, radial nach aussen verdrängt. Durch die nasenförmige Ausführung der Scheibe 54 wird das Zwischenmedium an einer radialen Fliessbewegung gehindert, und es baut sich an der ringförmigen Nase eine Flächenpressung auf, welche die Dichtfunktion stützt. Ähnliches gilt auch für den Zwischenmediumsbereich 56, ebenfalls ausgebildet als ringförmiges Element 56, welches durch die Verformung des Ringes 57 axial verpresst wird und dessen durch diese Verpressung mögliche Fliessbewegung in radialer Richtung (zur Rohrachse hin) ebenfalls durch die nasenförmige Ausführung der Scheiben zusätzlich behindert wird. Dies führt auch hier zu einer erhöhten Flächenpressung des Zwischenmediums an der scheibenförmigen Aufkragung 54 und einer Mutter 55, welche die Dichtfunktion unterstützt.

Auch beim Element gemäss Fig. 3 ist auf einen Dichteunterschied von Zwischenmedium und Rohrende zu achten, da die durch das Rohr 50 bzw. die durch den Flansch 51 (beispielsweise bei Einschraubung in ein Pumpengehäuse) übertragenen Strukturschwingungen reflektiert werden (Reflexion am offenen Ende). Für das Zwischenmedium gelten dieselben Kriterien wie bei dem in Fig. 2 dargestellten Element, damit auch die Absorption der Schallwellen durch das weiche Zwischenmedium bewirkt werden kann. Die Verpressung des Zwischenmediums erfolgt durch die Mutter 55, welche in eine Buchse 53 eingeschraubt wird. Die Ringe 56 und 57, gefertigt aus dem beschriebenen Zwischenmedium, werden folglich durch die Mutter 55 axial in Rohrachsenrichtung verpresst und haben im nicht eingebauten Zustand ein grösseres Volumen. Denkbar wäre weiterhin, dass die beiden Ringe 56 und 57 ein gemeinsames Bauteil darstellen, z.B. in Form ein aufvulkanisierten Wulstes.

Die Buchse 53 wird in den Flansch 51 eingeschraubt, wobei das ringförmige Gehäuse 52 der Abdichtung dieser Verschraubung dient. Dies ist bei Verschraubungen von Rohrleitungen in Lenkgetriebe und Pumpe einer Servolenkung Stand der Technik.

Durch die direkte Einschraubung des Elementes in ein Pumpengehäuse und/oder einen Verbraucher entfällt der bisher vorgesehene Rohranschluss, was eine erhebliche Reduktion der Kosten gegenüber dem in Fig. 2 dargestellten Element darstellt.

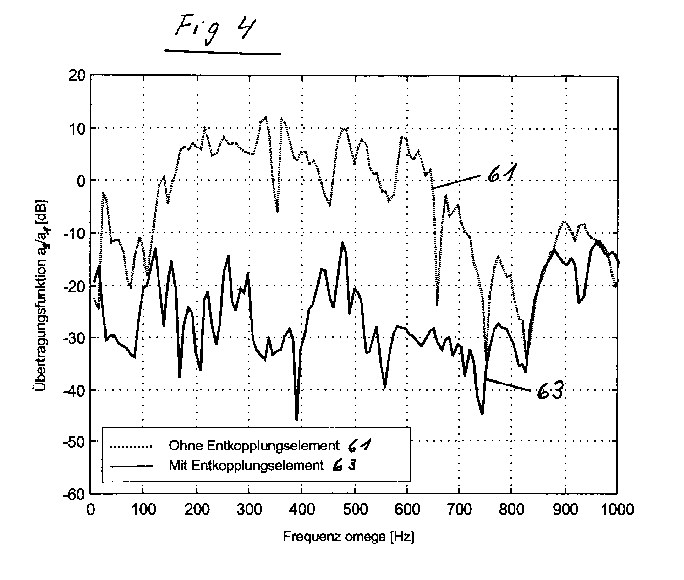

In Fig. 4 schlussendlich ist eine Grafik dargestellt zum Nachweis der Funktion eines Enkoppelungselementes, beispielsweise dargestellt in Fig. 2. Dargestellt sind zwei Messungen, welche in einem System ermittelt wurden, welches jenem in Fig. 1 entspricht. An zwei Punkten des Rohrleitungssystems wurde mit piezoelektrischen Beschleunigungsaufnehmern die Beschleunigung der Rohrwandung senkrecht zur Rohrachse, d.h. in radialer Richtung des Rohrquerschnittes, gemessen. Die erste Messstelle ist im Rohrleitungsabschnitt 33, und hier wurde das Signal a₁ aufgenommen. Die zweite Messstelle liegt im Rohrleitungsabschnitt 40, und hier wurde das Signal a₂ aufgenommen. Das Verhältnis von a₂ zu a₁ über der Frequenz stellt die Übertragungsfunktion (= Amplitudengang oder Frequenzgang) der Beschleunigung der Rohrwandung senkrecht zur Rohrachse dar. Dies kann als ein Mass für die Strukturschwingungen und damit für den Körperschall herangezogen werden. Mit der punktierten Linie 61 wird die Übertragungsfunktion eines Dehnschlauches 35 ohne nachgeschaltetes Entkoppelungselement 39 gezeigt. Man sieht, dass die Übertragungsfunktion sogar höher als 1 (bzw. 0 dB) wird und folglich die Schwingungen im Rohrleitungsabschnitt 39 stärker sind als im Abschnitt 33. Dies ist ein Indiz dafür, dass der Dehnschlauch, obgleich seiner guten Minderung der Druckpulsationen, die Körperschallübertragung nicht verhindert. In der durchgezogenen Kurve 63 ist die gleiche Übertragungsfunktion für jenes System dargestellt, in dem das Entkoppelungselement 39 dem Dehnschlauch 35 nachgeschaltet wurde. Es zeigt sich eine erhebliche Minderung der Rohrschwingung im Abschnitt 40 (a₁) gegenüber dem Abschnitt 33 (a₂) .

Bei den Vorrichtungen, dargestellt in den Fig. 2 und 3, handelt es sich selbstverständlich nur um Beispiele zur Erläuterung der vorliegenden Erfindung. Selbstverständlich kann es sich bei der unterbrochenen Rohrleitung auch um eine Kunststoffleitung handeln, wobei allerdings die Problematik der Körperschallübertragung in Kunststoffrohren weniger gravierend sein kann. Die Auslegung der Vorrichtung im Falle der Verwendung von beispielsweise verstärkten Kunststoffrohren ist aber ähnlich denjenigen, dargestellt in den Fig. 2 und 3, indem wiederum ein Zwischenmedium gewählt wird, dessen Dichte geringer ist als die Dichte des Polymermaterials, aus welchem die Rohrleitung hergestellt ist. Auch die die Vorrichtung aussen umgreifende Hülle bzw. die ringförmige Anschlussbuchse 53 muss nicht zwingend aus Metall hergestellt sein, sondern auch dafür kann beispielsweise ein verstärktes Polymermaterial verwendet werden. Auch muss die in Fig. 2 dargestellte Hülse bzw. die Mutter 55 aus Fig. 3 nicht zwingend verschraubbar sein, sondern im Sinne eines sogenannten Einwegartikels kann die Hülse bzw. die Mutter bei der Montage des Zwischenmediums verpressend angeordnet werden, beispielsweise mittels Schrumpf-, Press- oder Spritzgusstechnik. Statt der dargestellten Schrauben können beispielsweise auch Nieten verwendet werden, wie auch andere Montageorgane.

Als Zwischenmedium eignen sich insbesondere Elastomere oder gummielastische Polymermaterialien, welche mittels Extrusions-, Spritz- oder Giesstechnik bzw. mittels Aufvulkanisieren zur Bildung der Verbindungsanordnung zum Verbinden der beiden Anschlussenden der getrennten Leitung angeordnet werden können. Als geeignete Dämpfungsmaterialien kommen sicherlich NBR- Kautschuk, Silikone, Polyurethane sowie weitere thermoplastische oder duroplastische Elastomere in Frage, wobei aber feststeht, dass der verwendete Werkstoff das geforderte Kriterium der geringeren Dichte haben sollte und flexibel sein muss. Bei einer eventuellen Serienfertigung werden noch viele andere Faktoren, wie z.B. Temperatur- und Abriebfestigkeit, eine Rolle spielen, wie selbstverständlich auch die Anwendbarkeit mittels einfachster Fertigungstechnik. Schlussendlich können anstelle von einem Zwischenring auch zwei oder mehrere Zwischenringe angeordnet werden, wobei selbstverständlich auch eine Ausführung ohne Zwischenring durchaus denkbar ist, wie beispielsweise in Fig. 3 dargestellt.

## Patentansprüche

1. Anordnung zur Reduktion von Körperschallübertragungen in einer ein fluides Medium führenden Leitung (1, 6; 50, 53), gekennzeichnet durch:
- einen Trennbereich der das fluide Medium führenden Leitung (1, 6; 50, 51), aufweisend eine Verbindungsanordnung zum Verbinden der beiden Anschlussenden (13, 16; 54, 53) der getrennten Leitung (1, 6; 50, 51), mindestens bestehend aus einem Zwischenmedium (3, 56, 57) mit einem die beiden Leitungen verbindenden dichten Leitungsabschnitt (20), sowie
- Mittel (2, 5, 18; 55), um das Zwischenmedium (3, 56, 57) zu verpressen.

2. Anordnung, insbesondere nach Anspruch 1, dadurch gekennzeichnet, dass das Zwischenmedium (3, 56, 57) eine geringere Dichte aufweist als das Leitungsmaterial.

3. Anordnung, insbesondere nach einem der Ansprüche 1 oder 2, dadurch gekennzeichnet, dass das Zwischenmedium (3, 56, 57) im unmontierten Zustand ein grösseres Volumen aufweist als im mittels der Mittel zum Verpressen (2, 5, 18, 55) montierten Zustand.

4. Anordnung, insbesondere nach einem der Ansprüche 1 bis 3, dadurch gekennzeichnet, dass zwischen den Anschlussenden (13, 16) der getrennten Leitung (1, 6) mindestens ein unelastischer Zwischenring (4) angeordnet ist.

5. Anordnung, insbesondere nach einem der Ansprüche 1 bis 4, dadurch gekennzeichnet, dass das Zwischenmedium (3, 56, 57) aus einem weichen oder elastischen Material besteht, wie beispielsweise einem elastomeren Polymer, einem gummielastischen Polymer oder dergleichen.

6. Anordnung, insbesondere nach einem der Ansprüche 1 bis 5, dadurch gekennzeichnet, dass mindestens eines der Anschlussenden (13, 16, 54) eine Aufkragung (7, 8, 54) aufweist mit endständig in Leitungsrichtung wenigstens einseitig, vorzugsweise beidseitig überstehenden, nasenartigen Bereichen (9, 10, 11, 12, 58).

7. Anordnung, insbesondere nach einem der Ansprüche 1 bis 6, dadurch gekennzeichnet, dass, die beiden Anschlussenden (13, 16, 53, 54) sowie das Zwischenmedium (3, 56, 57) radial aussen umgreifend, eine Hülse (2, 5, 53) vorgesehen ist, um die Anschlussenden zusammenzuhalten und um das Zwischenmedium zu verpressen.

8. Anordnung, insbesondere nach Anspruch 7, dadurch gekennzeichnet, dass die Hülse in Leitungslängsrichtung dimensionsveränderbar ausgebildet ist.

9. Anordnung, insbesondere nach einem der Ansprüche 1 bis 8, dadurch gekennzeichnet, dass das Zwischenmedium (56, 57) mindestens zweiteilig ausgebildet ist, wobei die beiden Teile beispielsweise je ring- oder scheibenartig ausgebildet sind und entlang einer gemeinsamen Trennfläche aneinanderstossen.

10. Anordnung, insbesondere nach einem der Ansprüche 1 bis 9, dadurch gekennzeichnet, dass das eine Anschlussende (53) der Leitung unmittelbar an ein Schall und/oder Pulsationen erzeugendes Organ (51) angekoppelt ist, wie beispielsweise ein Pumpengehäuse oder einen Pulsationsdämpfer.

11. Verwendung der Anordnung nach einem der Ansprüche 1 bis 10 zur Reduktion von Vibrations- bzw. Körperschallwellenübertragung in Hydrauliksystemen, insbesondere bei hohen Drücken.

12. Verwendung der Anordnung nach einem der Ansprüche 1 bis 10 zur Reduktion von Vibrations- bzw. Körperschallwellenübertragung in Hydrauliksystemen, wobei die Anordnung einer Pumpe nachgeschaltet angeordnet ist und weiter zwischen Pumpe und Anordnung eine Vorrichtung zur Pulsationsdämpfung (35) angeordnet ist.
